# EUROPÄISCHE PATENTSCHRIFT

(11) **EP 1 882 600 B1**
(45) Veröffentlichungstag und Bekanntmachung des Hinweises auf die Patenterteilung: **18.02.2009**
(21) Anmeldenummer: 07111025.8
(22) Anmeldetag: 26.06.2007
(51) Int. Cl.: B60G 11/44, B60G 21/05, B60G 11/10, B60G 9/04

(54) **Verbundlenkerachse**
Twist beam axle
Essieu à traverse déformable en torsion

(30) Priorität: 29.07.2006 DE 102006035195
(43) Veröffentlichungstag der Anmeldung: 30.01.2008
(73) Patentinhaber: Bayerische Motoren Werke Aktiengesellschaft, 80809 München (DE)
(72) Erfinder: Pauly, Axel, 85757 Karlsfeld (DE)

(56) Entgegenhaltungen:
- EP-A- 1 216 859
- EP-A1- 1 024 037
- DE-A1- 3 122 417
- DE-A1- 3 338 467
- DE-U1- 8 421 720
- DE-U1- 8 508 531
- GB-A- 2 351 050
- JP-A- 1 266 009

## Beschreibung

Die Erfindung betrifft eine Verbundlenkerachse eines zweispurigen Fahrzeugs mit einem linksseitigen und einem rechtsseitigen das jeweilige Hinterrad führenden Längslenker, die über einen Querträger miteinander verbunden und mit ihren dem Rad abgewandten in Fahrtrichtung betrachtet vorderen Ende direkt oder indirekt am Fahrzeugaufbau gelagert sind, sowie mit einem linksseitigen und einem rechtsseitigen jeweils im wesentlichen in Fahrzeug-längsrichtung ausgerichteten Blattfederelement, welches einer im wesentlichen vertikalen Verlagerung des Hinterrads in Richtung zum Fahrzeugaufbau eine Federkraft entgegensetzt und mit seinem in Fahrtrichtung vorderen Ende mit dem zugehörigen Längslenker verbunden ist und mit seinem hinteren Ende in Fahrtrichtung betrachtet hinter der im wesentlichen durch die Drehachsen der Hinterräder definierten Achsquerebene über ein Querkräfte aufnehmendes Anlenkelement am Fahrzeugaufbau abgestützt ist. Zum bekannten Stand der Technik wird neben der EP 1 216 859 A2 insbesondere auf die EP 1 024 037 A1 verwiesen.

Die unter der Bezeichnung "Verbundlenkerachse" dem Fachmann bekannte Hinterachs-Konstruktion ist insbesondere wegen ihrer kostengünstigen Konstruktion und den Vorteilen bezüglich des Bauraums bei Kraftfahrzeugen mit Frontantrieb weit verbreitet. Sie kann jedoch auch bei anderen zweispurigen Fahrzeugen sowie bei Fzg.-Anhängern zum Einsatz kommen. Im wesentlichen ist eine Verbundlenkerachse **dadurch gekennzeichnet, dass** ein linksseitiger und ein rechtsseitiger das jeweilige Hinterrad führender Längslenker in Fzg.-Fahrtrichtung vor der geometrischen Fzg.-Hinterachse (bzw. vor der diese enthaltenden vertikalen Achsquerebene) über einen Querträger miteinander verbunden und mit ihren dem Rad abgewandten in Fahrtrichtung betrachtet vorderen Ende über elastische Lager am Fahrzeug-Aufbau angelenkt sind. Neben den bereits erwähnten Eigenschaften bietet eine Verbundlenkerachse den Vorteil, bei Wankbewegungen des Fzg.-Aufbaus gewünschte kinematische Vorspureigenschaften und Sturzeigenschaften aufzuweisen, bei reinen Hubbewegungen jedoch nahezu keine Änderungen in Vorspur und Sturz zu erzeugen.

Nachteilig an Verbundlenkerachsen ist jedoch deren konzepttypische Anbindung an den Aufbau in einem relativ großen horizontalen Abstand vor der genannten Achsquerebene. Hierdurch erzeugen die an den Rädern bzw. an den Reifen angreifenden Seitenkräfte eine Momentenkomponente um die Hochachse des Achskörpers. Da zumindest bei Großserien-Fahrzeugen die Anbindung der Längslenker am Fahrzeugaufbau aus Gründen der Schwingungsisolation und der Schallisolierung mittels elastischer Lager realisiert ist, kommt es bei Fahrzuständen unter Seitenkrafteinfluss zu einem unerwünschten elastischen Lenkwinkel der Hinterachse, und zwar in Richtung "Übersteuern". Um dieses unerwünschte elastische Eigenlenkverhalten einer Verbundlenkerachse zu reduzieren, sind zwar verschiedene Maßnahmen bekannt, so bspw. die Verwendung von Lagern mit sog. Anlauframpe oder ein Anstellen der Hauptsteifigkeitsachsen der elastischen Lager, oder das Vorsehen zusätzlicher Lenker, jedoch können diese Maßnahmen nicht vollständig befriedigen. So verursacht eine Kompensation der elastischen Verformung der Lager in Längsrichtung infolge des Momentes aus den Radseitenkräften eine elastische Querverschiebung der Hinterachse relativ zum Aufbau. Die Verwendung zusätzlicher Lenker führt zu einer Verhärtung der grundsätzlich erwünschten Federung in Fzg.-Längsrichtung. Zusätzliche Lenker stellen außerdem zusätzliche Übertragungspfade für Schwingungen von der Achse in den Fzg.-Aufbau dar und können im übrigen nur bedingt zur Erhöhung der Steifigkeit der Anbindung um die Vertikalachse des Fahrzeugs beitragen.

Neben den im vorhergehenden Absatz erläuterten Abwandlungen wurden Ausgestaltungen von Verbundlenkerachsen bekannt, die sich unter anderem mit der Verringerung des erforderlichen Bauraumes und/oder einer vereinfachten Herstellbarkeit befassen und gegebenenfalls auch mit einer spezifischen Seitenführung. So beschreibt die GB 2 351 050 A eine mit Blattfederelementen ausgestattete Verbundlenkerachse, die sich im Vergleich zu Verbundlenkerachsen mit Schraubenfedern durch einen verringerten Bauraumbedarf auszeichnet. Die EP 1 024 037 A1 zeigt ebenfalls eine Verbundlenkerachse mit Blattfederelementen, bei welcher der Querträger und die Längslenker und die Blattfedern aus einem Stück in einem Verbundmaterial gefertigt sind. Auf die im vorhergehenden Absatz geschilderte Problematik des sog. "Seitenkraft-Übersteuerns" wird in diesen beiden genannten Schriften nicht eingegangen und es ist die Abstützung der Blattfederelemente am Fahrzeugaufbau in Fahrzeug-Querrichtung geringfügig beweglich ausgebildet.

Weiterhin zeigt die EP 1 216 859 A2 eine Verbundlenkerachse mit Blattfederelementen, welche zusätzlich der Seitenführung des jeweiligen Rades dienen, wofür das jeweilige Blattfederelement mit seinem in Fahrtrichtung hinteren Ende in Fahrzeug-Querrichtung im wesentlichen starr am Fahrzeugaufbau verankert ist, während das vordere Ende des Blattfederelements über eine Lasche längsverlagerbar und in Querrichtung nachgiebig am Längslenker aufgehängt ist. Im Bereich der durch Drehachsen der Räder definierten vertikalen Achsquerebene sind der jeweilige Längslenker und das zugehörige Blattfederelement über eine Klammer miteinander verbunden, wobei diese Verbindungsstelle über der Länge der Blattfeder betrachtet in etwa in deren Mitte liegt.

Was die Möglichkeit einer Seitenführung des Rades einer Achse durch ein Blattfederelement betrifft, so sei noch auf die DE 31 22 417 A1 hingewiesen, die eine besondere Achskonstruktion zeigt, die allerdings nicht als Verbundlenkerachse bezeichnet werden kann, da die den beiden Rädern zugeordneten Längslenker nicht über einen biegesteifen, jedoch torsionsweichen Querträger fest, sondern durch ein drehweiches und um die Fahrzeug-Hochachse biegeweiches quer verlaufendes Hochkantfederblatt nur äußerst weich miteinander verbunden sind. Insbesondere können bei dieser besonderen Achskonstruktion die beiden Räder unabhängig voneinander in Längsrichtung federn und ihre Vorspur zueinander durch elastische Verformung des Hochkantfederblatts ändern. Um dennoch ein akzeptables Vorspurverhalten zu erzielen, sollen radindividuelle Blattfedern die jeweilige Vorspur kontrollieren und sind hierzu mit einem Ende am jeweiligen Längslenker befestigt und mit ihrem anderen Ende längsverlagerbar und quersteif am Fahrzeugaufbau abgestützt.

Vorliegend soll nun für eine Verbundlenkerachse im üblichen Sinne, d.h. für eine Achse mit radindividuellen Längslenkern, die über einen biegesteifen, jedoch torsionsweichen Querträger fest miteinander verbunden sind, eine einfache Bauweise aufgezeigt werden, mit der das bekannte "Seitenkraft-Übersteuern" vermieden werden kann (= Aufgabe der vorliegenden Erfindung).

Die Lösung dieser Aufgabe ist **dadurch gekennzeichnet, dass** jedes Blattfederelement an seinen beiden Enden solchermaßen abgestützt ist, dass dessen vorderes Ende fest mit dem zugehörigen Längslenker verbunden ist, während das hintere Anlenkelement ausgelegt ist, Querkräfte und Vertikalkräfte zwischen dem Blattfederelement und dem Fahrzeugaufbau zu übertragen oder aufzunehmen, aber eine Bewegung des Blattfederelements in Fahrzeug-Längsrichtung zu ermöglichen und wobei die Abstände zwischen der Achsquerebene und vorderen elastischen Lagern der Längslenker einerseits und zwischen der Achsquerebene und den hinteren Aufbau-Anbindungspunkten der Blattfederelemente andererseits in Verbindung mit der Auswahl der Steifigkeit in Fahrzeug- Querrichtung von den vorderen elastischen Lagern einerseits und der Auswahl der Steifigkeit in Fahrzeug-Querrichtung von den hinteren Aufbau-Anbindungspunkten der Blattfederelemente am Aufbau andererseits die Elastizitäten der Achse in Querrichtung und Längsrichtung des Fahrzeugs so abgestimmt sind, dass unter Einwirkung von Seitenkräften auf die Räder im wesentlichen keine Übersteuertendenz zu beobachten ist.

Es wird somit zusätzlich zu der Übertragung von Radseitenkräften über die in Fahrtrichtung vorderen (und somit vor der Achsquerebene liegenden) elastischen Anlenkpunkte der Längslenker auch ein Anteil der Radseitenkräfte hinter der besagten Achsquerebene am Fahrzeug-Aufbau abgestützt. Dies kann baulich besonders einfach und gleichzeitig wirkungsvoll über das hierfür geeignet gestaltete und geeignet am Fahrzeug-Aufbau angebundene Blattfederelement (jeweils linksseitig und rechtsseitig) erfolgen, indem dieses mit seinem in Fahrtrichtung vorderen Ende am jeweiligen Längslenker im wesentlichen starr befestigt ist und mit seinem hinteren Ende, welches in Fahrtrichtung betrachtet hinter der genannten Achsquerebene liegt, über ein geeignetes Anlenkelement, das im wesentlichen nur Querkräfte und Vertikalkräfte übertragen kann, am Fzg.-Aufbau befestigt ist. Diese Bauweise ist erheblich einfacher als das aus der EP 1 216 859 A2 bekannte Achsprinzip, bei welchem neben den Abstützungen an den Enden jedes Blattfederelements auch eine Abstützung in der Mitte desselben am Längslenker erforderlich ist, und zwar über eine weiter oben bereits genannte Klammer. Letztere ist bei der hier vorgeschlagenen Verbundlenkerachse nicht erforderlich und dennoch kann mit der Übertragbarkeit von Querkräften im hinteren, die angegebenen Eigenschaften aufweisenden Anlenkelement ein Gegenmoment zu den durch die Längslenker vorne eingeleiteten Kräfte gebildet werden, während die Übertragbarkeit von Vertikalkräften die Tragfeder-Wirkung des Blattfederelements sicherstellt. Indem durch das genannte Anlenkelement im wesentlichen keine Längskräfte übertragen werden (können), tritt eine Einschränkung der gewünschten Elastizität bzw. erwünschten Federung in Fzg.-Längsrichtung nicht auf.

Das vorgeschlagene Blattfederelement, bei welchem es sich bspw. um eine teilelliptische Blattfeder handeln kann, alternativ jedoch auch um ein geeignet gestaltetes Blattfederpaket oder eine Parabelfeder und/oder ein vergleichbares Federelement aus einem Verbundwerkstoff, wird somit sowohl zur Federung des Fahrzeug-Aufbaus gegenüber der Achse, als auch zur Übertragung eines Anteils der Radseitenkräfte herangezogen. Was die Abfederung des Fahrzeug-Aufbaus gegenüber der Achse betrifft, so muss diese an dieser Achse keineswegs alleine durch die genannten Blattfederelemente erfolgen; vielmehr kann parallel eine Abstützung über Schraubenfedern oder Luftfedern oder dgl. vorgesehen sein, wenngleich ein aus dem Stand der Technik bereits bekannter Vorteil einer erfindungsgemäßen Achse, nämlich ein erzielbarer Bauraum-Gewinn, vorrangig nur mit einer Blattfeder oder dgl. alleine erzielt werden kann. Mit im wesentlichen längs liegenden, weit außen angeordneten Blattfedern kann nämlich in erheblichem Maße Bauraum gegenüber den üblicherweise verwendeten Schraubenfedern gewonnen werden.

Was die Abstützung von Radseitenkräften über das hintere Ende der Blattfederelemente am Fzg.-Aufbau betrifft, so werden nun unter Bezugnahme auf die gesamte Achse die Radseitenkräfte an dieser Achse über insgesamt vier Punkte in den Fzg.-Aufbau übertragen, wobei zwei Punkte (d.h. links und rechts) in Fahrtrichtung gesehen vor und zwei Punkte (d.h. links und rechts) hinter dem Radaufstandspunkt liegen. Dabei kann durch geeignete Abstimmung der Abstände zwischen der Achsquerebene und den vorderen elastischen Lagern einerseits und zwischen der Achsquerebene und den hinteren Aufbau-Anbindungspunkten der Blattfederelemente andererseits in Verbindung mit der Auswahl der Steifigkeit insbesondere in Fzg.-Querrichtung von den vorderen elastischen Lagern einerseits und der Auswahl der Steifigkeit insbesondere in Fzg.-Querrichtung von den hinteren Aufbau-Anbindungspunkten der Blattfederelemente am Aufbau andererseits ein gewünschtes elastisches Eigenlenkverhalten einer erfindungsgemäßen Verbundlenkerachse erreicht werden. Die Lage der Hauptsteifigkeitsachsen zumindest der vorderen Lager, d.h. die Abstimmung der Elastizitäten in Fzg.-Querrichtung und in Fzg.-Längsrichtung kann dabei so gewählt werden, dass durch ihre Lage ein gewünschtes elastisches Eigenlenkverhalten unterstützt oder zumindest weniger behindert wird, insbesondere dahingehend, dass unter Einwirkung von Seitenkräften auf die Räder im wesentlichen keine Übersteuertendenz zu beobachten ist. Im Hinblick hierauf sollte auch die Querelastizität der genannten Blattfederelemente berücksichtigt bzw. ausgelegt werden, nämlich im Hinblick auf die Erzielung eines gewünschten elastischen Seitenkraft-Lenkverhaltens einer erfindungsgemäßen Verbundlenkerachse. Dabei besteht der besondere Vorteil, dass trotz der Möglichkeit eines gewünschten elastischen Seitenkraftlenkens der Hinterachse eine erfindungsgemäße Verbundlenkerachse eine hohe Giersteifigkeit gegenüber dem Fzg.-Aufbau aufweist. Dies minimiert bei einseitigen Radumfangskräften ein nicht gewolltes Lenken.

Bei den Blattfederelementen kann es sich - wie bereits erwähnt wurde - um konventionelle Blattfedern handeln. Zur Erzielung von sehr guten Seitenführungseigenschaften können vorzugsweise Parabelfedern (d.h. teilelliptische Federn) vorgesehen sein. Das beschriebene Konzept lässt sich auch mit Federelementen aus Verbundwerkstoff realisieren. Als besonderer Vorteil ist in diesem Zusammenhang zu nennen, dass bei einem Bruch oder allgemein einem Funktionsausfall eines Federelements weiterhin eine ausreichende Achsführung vorliegt. Im übrigen besteht ein weiterer Vorteil einer erfindungsgemäßen Verbundlenkerachse darin, dass Reifen-Seitenkräfte und die Vertikalkräfte der Federung über bezogen auf die gesamte Achse vier Punkte in den Fahrzeug-Aufbau eingeleitet werden, was dem Leichtbau entgegen kommt und die Verwendung von weicheren, d.h. besser schwingungsisolierenden Elastomerlagern oder dgl. als Lagerstellen für die Längslenker am Fzg.-Aufbau ermöglicht.

Was die Ausbildung des genannten Anlenkelements für das Blattfederelement am Fahrzeug-Aufbau betrifft, welches im wesentlichen nur Querkräfte und Vertikalkräfte übertragen können soll, so kann dieses beispielsweise in Form einer Federlasche ausgebildet sein oder auch in Form eines geeigneten Gleitlagers, wobei eine Federlasche im wesentlichen um die Fahrzeug-Querachse verschwenkbar am Fzg.-Aufbau angebunden sein kann, um dem Erfordernis, dass das Anlenkelement des Blattfederelements zumindest anteilig in Fahrzeug-Längsrichtung verlagerbar ist, zu genügen. Damit lässt sich die durch die Blattfederelemente realisierte zusätzliche aufbauseitige Abstützung, die auch einen Teil der Seitenkräfte aufnimmt, in idealer Weise so gestalten, dass Querkräfte und Vertikalkräfte auf den Aufbau übertragen werden, hingegen eine geringfügige Längsbewegung der Verbundlenkerachse gegenüber dem Aufbau durch diese zusätzliche Abstützung nicht behindert wird. Selbstverständlich können die genannten Anlenkelemente anstelle der Federlaschen-Bauart auch als andersartiges Zwischenelement ausgebildet sein.

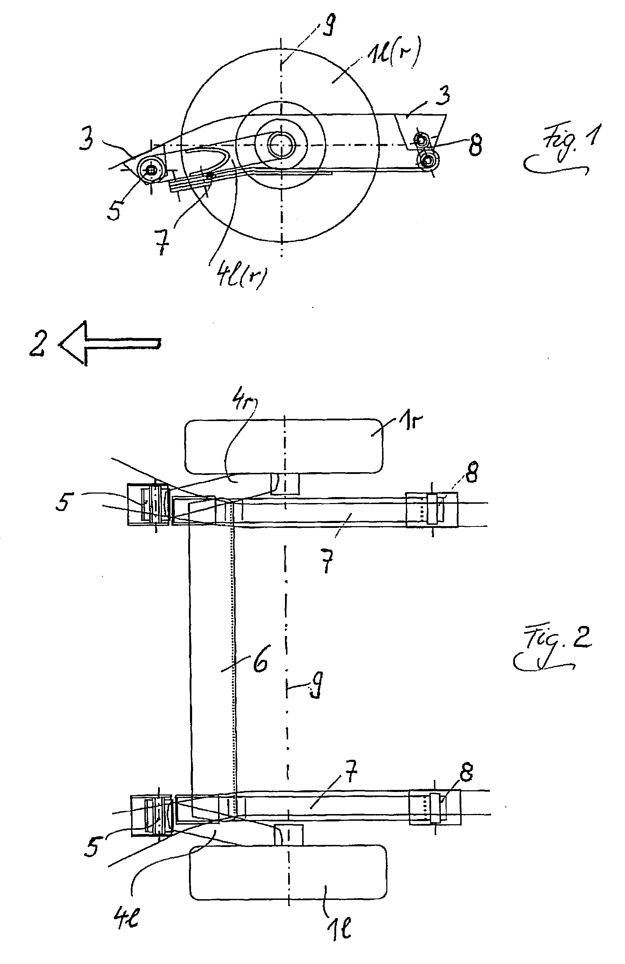

Im weiteren wird die Erfindung anhand eines lediglich prinzipiell dargestellten bevorzugten Ausführungsbeispieles weiter erläutert, wobei die beigefügte **Figur 1** die Seitenansicht einer erfindungsgemäßen Verbundlenkerachse und **Figur 2** die Aufsicht auf diese Achse zeigt.

Mit der Bezugsziffer 1l ist das linke und mit der Bezugsziffer 1r das rechte Hinterrad eines ansonsten nicht weiter dargestellten zweispurigen Kraftfahrzeugs bzw. PKW's gekennzeichnet, dessen Fahrtrichtung folglich dem Pfeil 2 entspricht. Diese beiden Hinterräder 1l, 1r sind über eine sog. (dem Fachmann grundsätzlich bekannte) Verbundlenkerachse gegenüber dem nicht näher dargestellten Fahrzeug-Aufbau 3 geführt, die linksseitig und rechtsseitig jeweils einen sich im wesentlichen in Fahrtrichtung 2 nach vorne erstreckenden radführenden Längslenker 4l, 4r aufweist. Jeder Längslenker 4l, 4r ist mit seinem dem Hinterrad 1l bzw. 1r abgewandten Ende über ein elastisches Lager 5 am Fzg.-Aufbau 3 abgestützt; ferner sind die beiden Längslenker 41, 4r über einen Querträger 6 fest miteinander verbunden. Die in Fig.2 gestrichelt dargestellten Drehachsen der Hinterräder bestimmen dabei im wesentlichen eine sog. Achsquerebene 9 (deren andere Dimension die Vertikalrichtung ist).

Zusätzlich zu diesen soweit erläuterten und (bis auf hier nicht vorhandene Schraubenfedern) eine Verbundlenkerachse der gängigen Bauart bildenden Elementen ist hier linksseitig sowie rechtsseitig jeweils ein Blattfederelement 7 vorgesehen, das mit seinem in Fahrtrichtung 2 vorderen Ende kraft- und momentenfest mit dem jeweiligen Längslenker 4l bzw. 4r verbunden ist, während das in Fahrtrichtung hintere Ende dieses Blattfederelements 7 über ein hier in Form einer Federlasche ausgebildetes Anlenkelement 8 am Fzg.-Aufbau 3 angebunden bzw. abgestützt ist. Dieses Anlenkelement 8 bzw. diese Federlasche ist dabei gegenüber dem Fzg.-Aufbau 3 um die Querachse des Fahrzeugs verschwenkbar, so dass eine Verlagerung des jeweiligen Blattfederelements 7 in Fzg.-Längsrichtung (d.h. in bzw. gegen Fahrrichtung 2) möglich ist, während Kräfte in Fzg.-Querrichtung (diese ist in der in Fig.2 dargestellten Horizontalebene senkrecht zur Fzg.-Längsrichtung) ebenso vom Blattfederelement 7 in den Fzg.-Aufbau 3 übertragen werden wie Vertikalkräfte, die in der Darstellung nach Fig.1 senkrecht zur Fzg.-Längsrichtung bzw. Fahrtrichtung 2 wirken.

Aufgrund der Übertragbarkeit von Vertikalkräften in den Anlenkelementen 8 können die beiden Blattfederelemente 7 die Funktion der üblichen Tragfedern für den Fzg.-Aufbau 3 übernehmen, nachdem sie mit ihrem vorderen Ende fest (d.h. fähig zur Übertragung von Kräften und Momenten in beliebiger Richtung) mit dem jeweiligen Längslenker 4l bzw. 4r verbunden sind, während aufgrund der Übertragbarkeit von Querkräften in den Anlenkelementen 8 auf die Hinterräder 1l, 1r an der Reifenaufstandsfläche einwirkende Seitenkräfte nun nicht nur über die Längslenker 4l, 4r über die elastischen Lager 5 in Fahrtrichtung 2 betrachtet vor der Achsquerebene 9 in den Fzg.-Aufbau 3 eingeleitet werden, sondern auch hinter der Achsquerebene 9 über die Blattfederelemente 7 und deren Anlenkelemente 8. Damit ist deutlich besser ein gewünschtes elastisches Eigenlenkverhalten dieser Verbundlenkerachse darstellbar, wobei noch darauf hingewiesen sei, dass durchaus eine Vielzahl von Details abweichend von obigen Erläuterungen gestaltet sein kann, ohne den Inhalt der Patentansprüche zu verlassen.

## Patentansprüche

1. Verbundlenkerachse eines zweispurigen Fahrzeugs mit einem linksseitigen und einem rechtsseitigen das jeweilige Hinterrad (11, 1 r) führenden Längslenker (4l, 4r), die über einen Querträger (6) miteinander verbunden und mit ihren dem Hinterrad (1l,1r) abgewandten in Fahrtrichtung (2) betrachtet vorderen Ende direkt oder indirekt am Fahrzeugaufbau (3) gelagert sind, sowie mit einem linksseitigen und einem rechtsseitigen jeweils im wesentlichen in Fahrzeuglängsrichtung ausgerichteten Blattfederelement (7), welches einer im wesentlichen vertikalen Verlagerung des Hinterrads (1l, 1r) in Richtung zum Fahrzeugaufbau (3) eine Federkraft entgegensetzt und mit seinem in Fahrtrichtung vorderen Ende mit dem zugehörigen Längslenker (4l, 4r) verbunden ist und mit seinem hinteren Ende in Fahrtrichtung (2) betrachtet hinter der im wesentlichen durch die Drehachsen der Hinterräder (1l, 1r) definierten Achsquerebene (9) über ein Querkräfte aufnehmendes Anlenkelement (8) am Fahrzeugaufbau (3) abgestützt ist,
**dadurch gekennzeichnet, dass** jedes Blattfederelement (7) an seinen beiden Enden solchermaßen abgestützt ist, dass dessen vorderes Ende fest mit dem zugehörigen Längslenker (4l, 4r) verbunden ist, während das hintere Anlenkelement (8) ausgelegt ist, Querkräfte und Vertikalkräfte zwischen dem Blattfederelement (7) und dem Fahrzeugaufbau (3) zu übertragen oder aufzunehmen, aber eine Bewegung des Blattfederelements (7) in Fahrzeug-Längsrichtung zu ermöglichen, und wobei die Abstände zwischen der Achsquerebene (9) und vorderen elastischen Lagern (5) der Längslenker (4l, 4r) einerseits und zwischen der Achsquerebene (9) und den hinteren Aufbau-Anbindungspunkten der Blattfederelemente (7) andererseits in Verbindung mit der Auswahl der Steifigkeit in Fahrzeug- Querrichtung von den vorderen elastischen Lagern (5) einerseits und der Auswahl der Steifigkeit in Fahrzeug-Querrichtung von den hinteren Aufbau-Anbindungspunkten der Blattfederelemente (7) am Aufbau andererseits die Elastizitäten der Achse in Querrichtung und Längsrichtung des Fahrzeugs so abgestimmt sind, dass unter Einwirkung von Seitenkräften auf die Räder im wesentlichen keine Übersteuertendenz zu beobachten ist.

2. Verbundlenkerachse nach Anspruch 1,
**dadurch gekennzeichnet, dass** das hintere Anlenkelement (8) in Form eines Gleitlagers oder einer Federlasche ausgebildet ist, welche um die Fahrzeug-Querachse verschwenkbar und somit anteilig in Fahrzeug-Längsrichtung verlagerbar ist

3. Verbundlenkerachse nach Anspruch 1 oder 2,
**dadurch gekennzeichnet, dass** das Blattfederelement (7) als Blattfederpaket oder als Parabelfeder ausgebildet ist und/oder ein vergleichbares Federelement aus einem Verbundwerkstoff ist.

## Claims

1. A twist beam axle of a two-track vehicle with a left-hand and a right-hand trailing link (4l, 4r) guiding the respective rear wheel (1l, 1r), which trailing links are connected to one another by means of a traverse member (6) and are mounted by their leading end remote from the rear wheel (11, 1 r), observed in the direction (2) of travel, directly or indirectly to the vehicle bodywork (3), as well as with a left-hand and a right-hand leaf spring element (7) which is substantially oriented in each case in the longitudinal direction of the vehicle and which counteracts a substantially vertical displacement of the rear wheel (1l, 1r) in the direction of the vehicle bodywork (3) with a spring force and is connected by its leading end in the direction of travel to the associated trailing link (4l, 4r) and is supported on the vehicle structure (3) by its rear end, observed in the direction (2) of travel, behind the axial transverse plane (9) defined substantially by the rotational axes of the rear wheels (1l, 1r), by means of a coupling element (8) receiving transverse forces, **characterised in that** each leaf spring element (7) is supported at its two ends in such a way that the leading end thereof is rigidly connected to the associated trailing link (4l, 4r) while the rear coupling element (8) is designed to transmit or absorb transverse forces and vertical forces between the leaf spring element (7) and the vehicle bodywork (3), but to allow a movement of the leaf spring element (7) in the longitudinal direction of the vehicle, and wherein the spacings between the axial transverse plane (9) and the leading elastic bearings (5) of the trailing links (4l, 4r), on the one hand, and between the axial transverse plane (9) and the rear bodywork connection points of the leaf spring elements (7), on the other hand, in connection with the selection of the rigidity in the transverse direction of the vehicle of the leading elastic bearings (5), on the one hand, and the selection of the rigidity in the vehicle transverse direction of the rear bodywork connection points of the leaf spring elements (7) on the bodywork, on the other hand, and the elasticities of the axle in the transverse direction and longitudinal direction of the vehicle are matched to one another in such a way that under the action of lateral forces on the wheels, substantially no over-steering tendency is to be observed.

2. A twist beam axle according to claim 1, **characterised in that** the rear coupling element (8) is configured in the form of a slide bearing or a spring lug, which can be pivoted about the transverse axis of the vehicle and can thus be displaced proportionately in the longitudinal direction of the vehicle.

3. A twist beam axle according to claim 1 or 2, **characterised in that** the leaf spring element (7) is configured as a leaf spring package or as a parabolic spring and/or is a comparable spring element made of a composite material.

## Revendications

1. Essieu à traverse déformable en torsion pour un véhicule à deux voies comportant un bras longitudinal (41, 4r) respectif guidant une roue arrière (11, 1r) du côté gauche et du côté droit, ces bras étant reliés par une traverse (6) et montés par leur extrémité avant à l'opposé de la roue arrière (11, 1r) dans la direction de déplacement (2), directement ou indirectement à la carrosserie (3) du véhicule et un élément de ressort-lame (7) du côté gauche et un élément de ressort-lame (7) du côté droit, alignés chacun pratiquement dans la direction longitudinale du véhicule, cet élément de ressort-lame (7) opposant une force de ressort à un déplacement pratiquement vertical de la roue arrière (11, 1r) en direction de la carrosserie (3) et par son extrémité avant dans la direction de déplacement, cet élément de ressort-lame (7) est relié au bras longitudinal (41, 4r) correspondant, et par son extrémité arrière dans la direction de déplacement (2), derrière le plan transversal de l'essieu (9) défini pratiquement par l'axe de rotation des roues arrière (11, 1r), cet élément de ressort-lame est appuyé à la carrosserie (3) du véhicule par l'intermédiaire d'un élément d'articulation (8) absorbant les efforts transversaux,
**caractérisé en ce que**
chaque élément de ressort-lame (7) est appuyé par ses deux extrémités et son extrémité avant est reliée solidairement au bras longitudinal (41, 4r) correspondant et l'élément d'articulation arrière (8) est réalisé pour transmettre ou absorber les efforts transversaux et les efforts verticaux exercés entre l'élément de ressort-lame (7) et la carrosserie (3) du véhicule tout en permettant à l'élément de ressort-lame (7) de se déplacer dans la direction longitudinale du véhicule, et
l'écart d'une part, entre le plan transversal (9) de l'essieu et les paliers élastiques avant (5) des bras longitudinaux (41, 4r) et d'autre part entre le plan transversal (9) de l'essieu et les points de fixation arrière des éléments de ressort-lame (7) à la carrosserie, en liaison d'une part avec la sélection de la rigidité des paliers élastiques avant (5) dans la direction transversale du véhicule et d'autre part la sélection de la rigidité dans la direction transversale du véhicule pour les points de montage et de fixation arrière des éléments de ressort-lame (7) à la carrosserie, définissent l'élasticité de l'essieu dans la direction transversale et celle dans la direction longitudinale du véhicule pour que l'action des efforts latéraux exercés sur les roues, n'engendre pratiquement aucune tendance au survirage.

2. Essieu à traverse déformable en torsion selon la revendication 1,
**caractérisé en ce que**
l'élément d'articulation arrière (8) est réalisé sous la forme d'un palier lisse ou d'une patte de ressort qui peut pivoter autour de l'axe transversal du véhicule et ainsi participer au déplacement dans la direction longitudinale du véhicule.

3. Essieu à traverses déformables en torsion selon la revendication 1 ou 2,
**caractérisé en ce que**
l'élément de ressort-lame (7) est sous la forme d'un paquet de ressorts lames ou de ressorts-lames paraboliques et/ou est constitué par un élément de ressort comparable en un matériau composite.
